# EUROPÄISCHE PATENTANMELDUNG

(11) **EP 3 168 698 A1**
(43) Veröffentlichungstag der Anmeldung: **17.05.2017**
(21) Anmeldenummer: 15193995.6
(22) Anmeldetag: 11.11.2015
(51) Int. Cl.: G05B 17/02, G06Q 10/06

(54) **VERFAHREN UND VORRICHTUNG ZUM OPTIMIEREN EINER ANLAGENVERFÜGBARKEIT**

(71) Anmelder: Bayer Technology Services GmbH, 51368 Leverkusen (DE)
(72) Erfinder: Kalmbach, Dr. Patrik Christoph, 50937 Köln (DE); Brüll, Prof. Dr. Ludger, 51375 Leverkusen (DE); Wimmer, Dennis, 51063 Köln (DE)
(74) Vertreter: BIP Patents

(57) **Zusammenfassung**

Die Erfindung betrifft ein Verfahren zum Optimieren einer Anlagenverfügbarkeit von mindestens einer Anlage (102), insbesondere einer chemischen Produktionsanlage (102), wobei die Anlage (102) eine Mehrzahl von Anlagenkomponenten (104.1, 104.2, 104.3, 104.4) und mindestens eine funktionale Verbindung (106) zwischen zumindest zwei Anlagenkomponenten (104.1, 104.2, 104.3, 104.4) aufweist, umfassend Bereitstellen von zumindest einem Modell (200) der Anlage (102), wobei das Modell eine Mehrzahl von zu der jeweiligen Anlagenkomponente (104.1, 104.2, 104.3, 104.4) korrespondierenden Modellkomponenten (201, 202, 203, 203', 204, 205, 206, 206', 207, 208, 209) und mindestens eine zu der funktionalen Verbindung (106) korrespondierende funktionale Modellverbindung (210.1, 210.2) zwischen zumindest zwei Modellkomponenten (201, 202, 203, 203', 204, 205, 206, 206', 207, 208, 209) aufweist, Zuordnen von mindestens einem individuellen Kenngrößensatz einer Anlagenkomponente (104.1, 104.2, 104.3, 104.4) zu der korrespondierenden Modellkomponente (201, 202, 203, 203', 204, 205, 206, 206', 207, 208, 209), und Bestimmen von mindestens einer globalen Zuverlässigkeitskenngröße der Anlage (102), indem eine Simulation des Modells (200) der Anlage (102) basierend auf dem bereitgestellten individuellen Kenngrößensatz durchgeführt wird, wobei während der Durchführung der Simulation des Modells (200) der Anlage (102) mindestens ein veränderbarer individueller Kenngräßenparameter des individuellen Kenngrößensatzes von einer Modellkomponente (201, 202, 203, 203', 204, 205, 206, 206', 207, 208, 209) geändert wird, derart, dass die globale Zuverlässigkeitskenngröße geändert wird.

## Beschreibung

Die Erfindung betrifft ein Verfahren zum Optimieren einer Anlagenverfügbarkeit einer Anlage, wobei die Anlage eine Mehrzahl von Anlagenkomponenten und mindestens eine funktionale Verbindung zwischen zumindest zwei Anlagenkomponenten aufweist. Darüber hinaus betrifft die Erfindung eine Vorrichtung zum Optimieren einer Anlagenverfügbarkeit einer Anlage, ein Computerprogramm sowie ein System umfassend zumindest eine Vorrichtung und eine Anlage.

Ein stetiges Anliegen im Stand der Technik ist es, die Anlagenverfügbarkeit einer Anlage zu erhöhen. Insbesondere bei komplex aufgebauten chemischen Produktionsanlagen, die eine Vielzahl von Anlagenkomponenten (oft mehrere hundert) umfassen können, ist es das Ziel, die Anlagenverfügbarkeit zu verbessern. Grund hierfür ist, dass ein Ausfall der chemischen Produktionsanlage, also ein kompletter Stillstand der Anlage, in der Regel mit erheblichen Kosten verbunden ist.

Beispielhaft kann ein Ausfall einer (individuellen) Anlagenkomponente von der Vielzahl von Anlagenkomponenten der Anlage dazu führen, dass die gesamte Anlage und damit die gesamte Produktion still steht. Ist es dann noch erforderlich, die Ersatzanlagenkomponente für die ausgefallene Komponente zu bestellen, kann sich die Ausfallzeit deutlich erhöhen. Daher ist von zumindest einem Teil der Anlagenkomponenten eine Ersatzanlagenkomponente in einem Lager gelagert.

Problematisch ist jedoch, dass sich, insbesondere bei einer komplexen Anlage mit hunderten oder mehr Anlagenkomponenten, die Auswirkung eines Ausfalls von einer einzelnen Anlagenkomponente kaum abschätzen lässt. So kann es Anlagenkomponenten geben, deren Ausfall nahezu keinen Einfluss auf den Produktionsprozess haben, also zu keinem Ausfall der Anlage führen. Ferner ist häufig unklar, welche Anzahl von einer Ersatzanlagenkomponente bevorratet sein sollte. Folglich ist es im Stand der Technik üblich, von jeder in der Anlage verbauten Anlagekomponente im Durchschnitt ein oder zwei Ersatzanlagenkomponenten pro Zeiteinheit, z.B. pro Jahr, auf Lager zu haben. Nachteilig hieran ist, dass bei bestimmten Anlagenkomponenten die Wahrscheinlichkeit eines Ausfalls aufgrund individueller Kenngrößen der Anlagenkomponente erhöht sein kann. Ferner kann ein Ausfall einer derartigen Anlagenkomponente gleichzeitig zu einem kompletten Stillstand der Anlage führen. Mit anderen Worten wäre es bei einer derartigen Anlagenkomponente sinnvoll, eine höhere Anzahl der Ersatzanlagenkomponenten zu haben. Bei anderen Anlagenkomponenten kann die Ausfallwahrscheinlichkeit gering und/oder der Einfluss eines Ausfalls auf die gesamt Anlagenverfügbarkeit einer Anlage gering sein. Darüber hinaus können sich die Wiederbeschaffungszeiten der Ersatzteile stark unterscheiden, was ebenfalls unterschiedliche Anforderung an die Lagerhaltung mit sich bringt. Daher kann es bei der üblichen Lagerhaltung zu einer relativ hohen Ausfallzeit oder geringer Auslastung einer Anlage kommen, d. h. die Anlagenverfügbarkeit der Anlage gering sein. Aus dem Stand der Technik sind jedoch keine zuverlässigen Verfahren und Vorrichtungen bekannt, die eine Verbesserung der Anlagenverfügbarkeit ermöglichen würden.

Daher liegt der vorliegenden Erfindung die Aufgabe zugrunde, ein Verfahren zur Verfügung zu stellen, welches in einfacher Weise eine Optimierung der Anlagenverfügbarkeit von einer Anlage, insbesondere einer chemischen Produktionsanlage, ermöglicht.

Die zuvor hergeleitete und aufgezeigte Aufgabe wird gemäß einem ersten Aspekt der Erfindung bei einem Verfahren nach Patentanspruch 1 gelöst. Das Verfahren zum Optimieren einer Anlagenverfügbarkeit von mindestens einer Anlage, insbesondere einer chemischen Produktionsanlage, wobei die Anlage eine Mehrzahl von Anlagenkomponenten und mindestens eine funktionale Verbindung zwischen zumindest zwei der Anlagenkomponenten aufweist, umfasst:
- Bereitstellen von zumindest einem Modell der Anlage, wobei das Modell eine Mehrzahl von zu der jeweiligen Anlagenkomponente korrespondierenden Modellkomponenten und der funktionalen Verbindung aufweist und jede Modellkomponente durch individuelle Kenngrößenparameter definiert ist,
- Zuordnen von mindestens einem individuellen Kenngrößensatz einer Anlagenkomponente zu der jeweils korrespondierenden Modellkomponente, und
- Bestimmen von mindestens einer globalen Zuverlässigkeitskenngröße der Anlage, indem eine Simulation des Modells der Anlage basierend auf dem bereitgestellten individuellen Kenngrößensatz durchgeführt wird,

Wiederholung der Simulation in der mindestens ein veränderbarer und individueller Kenngrößenparameter des individuellen Kenngrößensatzes von einer Modellkomponente geändert wird, derart, dass die globale Zuverlässigkeitskenngröße geändert wird.

Indem im Gegensatz zum Stand der Technik ein Modell einer realen Anlage erstellt wird, wobei in dem Modell neben den Anlagenkomponenten auch die zwischen den Anlagenkomponenten befindlichen funktionalen Verbindungen berücksichtigt werden, kann durch einen Simulationsprozess des Modells mindestens ein individueller Kenngrößenparameter derart geändert werden, dass die globale Zuverlässigkeitskenngröße der Anlage geändert, insbesondere optimiert wird.

Das Verfahren wird typischerweise mit einer Recheneinrichtung, wie einem Computer, durchgeführt werden. Mit anderen Worten kann es sich bei dem Verfahren vorzugsweise um ein computerimplementiertes Verfahren handeln.

Bei der mindestens einen Anlage kann es sich um eine Produktionsanlage, insbesondere eine chemische Produktionsanlage, handeln. Die Anlage kann aus einer Vielzahl von Anlagenkomponenten (z.B. > 100) aufgebaut sein kann. Eine Anlagenkomponente zeichnet sich insbesondere dadurch aus, dass es sich um eine eigenständig funktionsfähige Baugruppe handelt, dessen Funktion vorzugsweise direkten Einfluss auf den Produktionsfluss hat. Typischerweise werden für die Anlagekomponenten weitere Kenngrößen definiert, wie z. B. Kapazitätsauslastung und Ausfallauslastung der Anlagekomponente, sowie mögliche Umleitungen des Produktstroms im Falle eines Ausfalls, Lebensdauer der Anlagenkomponente, Position der Anlagenkomponente in der Anlage, Austauschzeit der Anlagenkomponente, durchschnittliche Anzahl der Anlagenkomponenten in einem Lager pro Zeiteinheit, augenblickliche Anzahl der Anlagenkomponenten in dem Lager, individueller Aufwandsparameter der Anlagenkomponente, Lieferzeit der Anlagenkomponente, Reinigungsaufwand der Anlagenkomponente, Belastungsgrad der Anlagenkomponente während des Betriebs in der Anlage. Eine Anlagenkomponente kann wiederum aus einer Mehrzahl von Elementen aufgebaut sein. Typischerweise werden in das Modell der Anlage lediglich die Elemente in Betracht gezogen, deren Defekt zum Ausfall oder Durchsatzminderung einer Anlagekomponente führt. Zu jedem Element werden ebenfalls Kenngrößenparameter definiert. Typische Kenngrößenparameter sind Position des Elements, Kapazitätsauslastung des Elements (auch Regelauslastung genannt), tatsächliche Kapazität bzw. maximale Ausfallauslastung des Elements, Lebensdauer des jeweiligen Elements, im Falle mehrerer gleicher Elemente in einer Anlagekomponente deren Anordnung (in Parallel bzw. in Serie), durchschnittliche Anzahl von im Lager verfügbaren Ersatzteilen für jedes Element, Wartungszyklus und Wartungszeit eines Elements, Lieferzeit des Elements usw...

Typischerweise erfolgt das Bereitstellen eines Modells der Anlage mit Hilfe einer Software zur Herstellung eines Reliability Block Diagramms (RBD) der Anlage.

Es ist erkannt worden, dass die Anlagenverfügbarkeit einer Anlage von der individuellen Zuverlässigkeitskenngrößen und insbesondere von der Position der Anlagenkomponente in der Anlage, insbesondere von der/n funktionale/n Verbindung/en der Anlagenkomponente mit mindestens einer weiteren Anlagenkomponente, abhängt. Wenn die Anlagenkomponente beispielsweise an einer Engstelle des Produktionsflusses positioniert ist, kann deren Ausfall zu einem Ausfall der gesamten Anlage führen, während beispielsweise an einer Position in einem parallelen Produktionsflusszweig (lediglich) die Produktionsrate der Anlage durch einen Ausfall reduziert sein kann. Vorliegend wird daher erfindungsgemäß vorgeschlagen, von der realen Anlage eine Abbildung der Topologie der Anlage in Form eines Modells bereitzustellen, in welchem vorzugsweise sämtliche Anlagenkomponenten und vorzugsweise sämtliche funktionalen Verbindungen abgebildet sind.

Eine funktionale Verbindung ist vorliegend insbesondere eine Wirkverbindung von einer ersten Anlagenkomponente auf eine weitere Anlagenkomponente. Die funktionale Verbindung ist vorzugsweise eine tatsächlich implementierte Verbindung, wie ein tatsächlicher Produktfluss, oder eine potentielle Verbindung. Eine potentielle Verbindung ist eine in einem derzeitigen Betriebsmodus der Anlage nicht implementierte funktionale Verbindung, die z.B. bei einem Ausfall einer Anlagenkomponente zur Kompensation der ausgefallenen Anlagenkomponente aktiviert oder implementiert werden kann.

Von mindestens einer der zumindest zwei Anlagenkomponenten kann ein individueller Kenngrößensatz bereitgestellt werden. Vorzugsweise wird für sämtliche Anlagenkomponenten ein entsprechender individueller Kenngrößensatz bereitgestellt. Ein individueller Kenngrößensatz zeichnet sich vorliegend dadurch aus, dass aus diesem Kenngrößensatz zumindest die individuelle Ausfallwahrscheinlichkeit der entsprechenden Anlagenkomponente pro Zeiteinheit (z.B. pro Jahr) abgeleitet werden kann. Beispielsweise kann der individuelle Kenngrößensatz einen Ausfallwahrscheinlichkeitsparameter umfassen. Darüber hinaus umfasst der individuelle Kenngrößensatz typischerweise mindestens einen individuellen Kenngrößenparameter, der veränderbar ist. Ein änderbarer individueller Kenngrößenparameter zeichnet sich dadurch aus, dass der Istwert von diesem individuellen Kenngrößenparameter in der realen Welt regelbar sein kann.

Eine Anlagenverfügbarkeit wird insbesondere durch eine globale Zuverlässigkeitskenngröße - z.B. Ausfallrate pro Zeiteinheit oder Kapazität der Anlage pro Zeiteinheit (pro Jahr) - ausgedrückt. Um die globale Zuverlässigkeitskenngröße zu ändern, insbesondere zu erhöhen, wird das Modell der Anlage unter Berücksichtigung des mindestens einen individuellen Kenngrößensatzes simuliert. Die globale Zuverlässigkeitskenngröße wird dadurch geändert, insbesondere verbessert, dass der mindestens eine veränderbare individuelle Kenngrößenparameter während der Simulation geändert wird und die Auswirkungen der Änderung untersucht werden. Insbesondere kann durch die Simulation der mindestens eine veränderbare individuelle Kenngrößenparameter derart verändert werden, dass sich die globale Zuverlässigkeitskenngröße verbessert. Anschließend kann der reale Istwert des mindestens einen durch die Simulation geänderten individuellen Kenngrößenparameters entsprechend dem Simulationsergebnis geregelt werden. Insbesondere kann der geänderte individuelle Kenngrößenparameter als Sollwert vorgegeben werden. Alternativ oder zusätzlich kann das Simulationsergebnis angezeigt und/oder an eine weitere Recheneinrichtung weitergeleitet werden.

Es versteht sich, dass während der Simulation eine Mehrzahl von änderbaren individuellen Kenngrößenparametern geändert werden können, um die globale Zuverlässigkeitskenngröße der Anlage zu optimieren.

Gemäß einem ersten Ausführungsbeispiel des erfindungsgemäßen Verfahrens kann das Bereitstellen des Modells der Anlage ein Identifizieren der Mehrzahl von Anlagenkomponenten abhängig von mindestens einem Relevanzkriterium, ein Identifizieren von funktionalen Verbindungen zwischen den identifizierten Anlagenkomponenten und ein Abbilden der identifizierten Anlagenkomponenten und der identifizierten funktionalen Verbindungen in ein Modell umfassen, indem in einer ersten Datenbank umfassend Modellkomponenten mindestens eine zu der Anlagenkomponente korrespondierende Modellkomponente identifiziert wird. Um ein möglichst effizientes Modell der Anlage zu generieren, werden typischerweise (nur) die wesentliche Anlagenkomponenten und dessen wesentlichen Elemente identifiziert, eingegeben, bzw. aus einer Liste vordefinierter und im System hinterlegten Anlagekomponenten bzw. Elementen ausgewählt. Dies kann abhängig von mindestens einem (vorgebbaren) Relevanzkriterium erfolgen. Ziel hiervon ist es, nicht jedes Element, wie jede Schraube, als eigenständige Anlagenkomponente zu identifizieren, sondern eine sinnvolle funktionale Baugruppe. Ein Relevanzkriterium kann beispielsweise vorgeben, dass eine funktionale Baugruppe als ein eigenständiges Ersatzteil lieferbar ist, die Elemente der Baugruppe in einem unlösbaren Zusammenhang zueinander stehen, die Baugruppe einen Einfluss auf den Produktionsprozess besitzt, etc. Das mindestens eine Relevanzkriterium kann von der Art der technischen Anlage abhängen. In entsprechender Weise können funktionale Verbindungen identifiziert werden. Mittels einer ersten Datenbank, die insbesondere eine Modellkomponenten-Bibliothek umfassen kann, kann mindestens eine zu der identifizierten Anlagenkomponente korrespondierende Modellkomponente identifiziert werden. In effektiver Weise kann ein Modell einer Anlage erstellt und bereitgestellt werden.

Vorzugsweise kann das Identifizieren der Mehrzahl von Anlagenkomponenten das Erfassen von Anlagenkomponenten basierend auf Sensordaten und/oder von mindestens einer weiteren Datenquelle zur Verfügung gestellten Anlagenkomponentendaten unterstützt werden. Es ist erkannt worden, dass für die Erstellung eines Modells zunächst die Topologie der Anlage (möglichst genau) erfasst werden sollte. Dies kann beispielsweise durch bereitgestellte und von einem Modellierungsmodul auswertbare Anlagenkomponentendaten, wie Konstruktionspläne, Datenblätter, etc., erfolgen. Diese Anlagenkomponentendaten können beispielsweise von einer externen, über ein Kommunikationsnetz abrufbaren, Datenquelle bereitgestellt werden. Bei einer bevorzugten Ausführungsform werden alternativ oder zusätzlich Sensordaten von Sensoren, die in oder an der Anlage verbaut sind, ausgewertet. Insbesondere ist erkannt worden, dass eine Anlage modifiziert sein und damit von z.B. einem Konstruktionsplan abweichen kann. Durch Auswertung von Sensordaten kann die Änderung bei der Erstellung des Modells berücksichtigt werden. Auch können mittels Sensordaten funktionale Verbindungen zwischen zumindest zwei Anlagenkomponenten erfasst und identifiziert werden.

Bei einer besonders bevorzugten Ausführungsform kann bei der Durchführung der Simulation zumindest die Auswirkung eines Ausfalls der Anlagenkomponente auf die globale Zuverlässigkeitskenngröße der Anlage bestimmt werden. Durch Ändern des mindestens einen individuellen und änderbaren Kenngrößenparameters kann der Ausfall der entsprechenden Anlagenkomponente simuliert und der Ausfall der Anlagenkomponente auf die globale Zuverlässigkeitskenngröße der Anlage untersucht werden. Hierdurch kann insbesondere die Relevanz einer Anlagenkomponente auf den Produktionsprozess bestimmt werden. Ist die Relevanz hoch, kann eine Erhöhung des individuellen Kenngrößenparameters beispielsweise auf Kosten einer Reduzierung eines individuellen Kenngrößenparameters einer als weniger relevant bewerteten Anlagenkomponente erfolgen. Die globale Zuverlässigkeitskenngröße kann hierbei (trotz der Reduzierung) erhöht werden.

Der individuelle Kenngrößenparameter des individuellen Kenngrößensatzes der Anlagenkomponenten kann gemäß einer weiteren Ausführungsform zumindest basierend auf Sensordaten von der ersten Anlagenkomponente bestimmt werden. Vorzugsweise kann mindestens ein Sensor von einer Anlagenkomponente mindestens einen Parameter, wie einen augenblicklichen Zustandsparameter, erfassen. Mindestens ein individueller Kenngrößenparameter des individuellen Kenngrößensatzes von der Anlagenkomponente kann zumindest abhängig von diesen Sensordaten bestimmt werden.

Alternativ oder zusätzlich kann gemäß einer weiteren Ausführungsform der individuelle Kenngrößenparameter des individuellen Kenngrößensatzes der Anlagenkomponenten zumindest basierend auf historischen Daten der ersten Anlagenkomponente bestimmt werden. Die historischen Daten können in einer weiteren, insbesondere aktualisierbaren, Datenbank gespeichert sein. Beispielsweise können die von mindestens einen Sensor bereitgestellten Sensordaten für mindestens einen individuellen Kenngrößenparameter von einer Anlagenkomponente in der weiteren Datenbank gespeichert werden. Liegen neue Sensordaten vor, kann die Datenbank entsprechend aktualisiert werden. Es versteht sich, dass auch Daten von externen Quellen und/oder Benutzerschnittstellen in der Datenbank gespeichert werden können. Ein möglichst genauer individueller Kenngrößensatz kann erstellt werden.

Bei einer bevorzugten Ausführungsform kann während der Durchführung der Simulation mindestens ein veränderbarer individueller Kenngrößenparameter von mindestens einem individuellen Kenngrößensatz von einer Anlagenkomponente iterativ geändert werden, derart, dass die globale Zuverlässigkeitskenngröße geändert wird. Mit anderen Worten kann während der Simulation ein iterativer Optimierungsprozess angewendet werden, um mindestens einen, vorzugsweise eine Mehrzahl, besonders bevorzugt sämtliche änderbaren individuellen Kenngrößenparameter derart zu ändern, dass die globale Zuverlässigkeitskenngröße optimiert wird. Die Simulation kann beispielsweise beendet werden und das Simulationsergebnis ausgegeben werden, wenn keine Verbesserung der globalen Zuverlässigkeitsgröße durch Änderung eines änderbaren individuellen Kenngrößenparameters erzielt wird. Vorzugsweise kann für diese Optimierung ein Lagrange-Newton-Verfahren, angewendet werden.

Das Simulationsergebnis kann gemäß einer Ausführungsform zumindest die geänderte globale Zuverlässigkeitskenngröße und den mindestens einen geänderten individuellen Kenngrößenparameter von dem mindestens einen individuellen Kenngrößensatz umfassen. In einem Regelungsschritt kann ein Ist-Wert des geänderten individuellen Kenngrößenparameters an den mindestens einen geänderten individuellen Kenngrößenparameter von dem mindestens einen individuellen Kenngrößensatz angepasst werden. Mit anderen Worten kann ein realer Wert, der die Anlage betrifft, abhängig vom Simulationsergebnis geregelt werden. Der geänderte individuelle Kenngrößenparameter des Simulationsergebnisses kann als Sollwert zur Anpassung des entsprechenden realen Ist-Wert des individuellen Kenngrößenparameters eingesetzt werden.

Der mindestens eine individuelle Kenngrößenparameter des mindestens einen individuellen Kenngrößensatz kann ausgewählt sein aus der Gruppe umfassend Lebensdauer der Anlagenkomponente, Position der Anlagenkomponente in der Anlage, Austauschzeit der Anlagenkomponente (z.B. incl. Kalibrierungszeit), durchschnittliche Anzahl der Anlagenkomponente in einem Lager pro Zeiteinheit, augenblickliche Anzahl der Anlagenkomponente in dem Lager, individueller Aufwandsparameter der Anlagenkomponente, Lieferzeit der Anlagenkomponente, Reinigungsaufwand der Anlagenkomponente, Belastungsgrad der Anlagenkomponente während des Betriebs in der Anlage. Typische veränderbare Kenngrößenparameter sind Regelauslastung, Lebensdauer, Anzahl von im Lager verfügbaren Ersatzteilen, Wartungszyklus und Wartungszeit eines Elements.

Darüber hinaus kann bei einer Ausführungsform des erfindungsgemäßen Verfahrens die Simulation des Modells der Anlage bei Detektion einer Änderung von mindestens einem individuellen Kenngrößenparameter von mindestens einem individuellen Kenngrößensatz erneut durchgeführt werden. Ändert sich insbesondere aufgrund eines geänderten individuellen Kenngrößenparameters die individuelle Zuverlässigkeit einer Anlagenkomponente, kann dies (automatisch) eine erneute Durchführung einer erneuten Simulation zur Optimierung der globalen Zuverlässigkeitskenngröße auslösen. Es versteht sich, dass zur Vermeidung von einer Vielzahl von (unnötigen) Simulationen mindestens ein Grenzwert für die individuelle Zuverlässigkeit einer Anlagenkomponente und / oder für die globale Zuverlässigkeitskenngröße der Anlage vorgegeben werden kann. Nur oder erst bei einer Überschreitung eines Grenzwerts durch mindestens einen geänderten individuellen Kenngrößenparameter kann eine Simulation erneut durchgeführt werden. Zeitnah können individuelle Änderungen von Anlagenkomponenten, beispielsweise basierend auf Sensordaten, erfasst und bei der Simulation berücksichtigt werden.

Gemäß einer besonders bevorzugten Ausführungsform des erfindungsgemäßen Verfahrens kann mindestens ein globaler Aufwandsparameter vorgegeben werden. Während der Durchführung der Simulation des Modells der Anlage kann der veränderbare individuelle Kenngrößenparameter des individuellen Kenngrößensatzes von einer Modellkomponente geändert werden, derart, dass die globale Zuverlässigkeitskenngröße unter Einhaltung des vorgegebenen globalen Aufwandsparameters geändert wird. Ein globaler Aufwandsparameter, der beispielsweise durch einen Geldbetrag repräsentiert sein kann, kann vorgeben, wie hoch der maximale Aufwand pro Zeiteinheit (z.B. pro Jahr) ist, der zur Optimierung der Anlagenverfügbarkeit der ersten Anlagenkomponente zur Verfügung steht. Wie bereits ausgeführt wurde, kann jeder Anlagenkomponente ein individueller Aufwandsparameter zugeordnet sein. Hierbei kann es sich beispielsweise um den Aufwand handeln, eine Ersatzanlagenkomponente zu beschaffen. Beispielsweise kann der individuelle Aufwandsparameter durch einen Geldbetrag (pro (Ersatz-)Anlagenkomponente) repräsentiert sein. Die globale Zuverlässigkeitskenngröße kann während der Simulation unter Einhaltung des vorgegebenen globalen Aufwandsparameters optimiert werden. So kann beispielsweise die Anzahl an Ersatzanlagenkomponenten von mindestens einer Anlagenkomponente derart geändert werden, dass die globale Zuverlässigkeitskenngröße verbessert wird und gleichzeitig die Summe vorzugweise von sämtlichen individuellen Aufwandsparametern nicht den vorgegebenen globalen Aufwandsparameter überschreitet. Dies kann dazu führen, dass bei Detektion einer hohen Relevanz eine Erhöhung des individuellen Kenngrößenparameters beispielsweise auf Kosten einer Reduzierung eines individuellen Kenngrößenparameters einer als weniger relevant bewerteten Anlagenkomponente erfolgen kann. In einfacher Weise kann die Anlagenverfügbarkeit unter vorgebbaren Rahmenbedingungen optimiert werden.

Ein weiterer Aspekt der Erfindung ist eine Vorrichtung zum Optimieren einer Anlagenverfügbarkeit von mindestens einer Anlage, insbesondere einer chemischen Produktionsanlage, wobei die Anlage eine Mehrzahl von Anlagenkomponenten und mindestens eine funktionale Verbindung zwischen zumindest zwei Anlagenkomponenten aufweist. Die Vorrichtung umfasst mindestens einen Dateneingang eingerichtet zum Empfangen von zumindest einem Modell der Anlage. Das Modell weist eine Mehrzahl von zu der jeweiligen Anlagenkomponente korrespondierenden Modellkomponenten und mindestens eine zu der funktionalen Verbindung korrespondierende funktionale Modellverbindung zwischen zumindest zwei Modellkomponenten auf. Mindestens eine Zuordnungseinheit ist eingerichtet zum Zuordnen von mindestens einem individuellen Kenngrößensatz einer Anlagenkomponente zu der korrespondierenden Modellkomponente. Mindestens eine Simulationseinheit ist eingerichtet zum Bestimmen von mindestens einer globalen Zuverlässigkeitskenngröße der Anlage, indem eine Simulation des Modells der Anlage basierend auf dem bereitgestellten individuellen Kenngrößensatz durchgeführt wird. Während der Durchführung der Simulation des Modells der Anlage wird mindestens ein veränderbarer individueller Kenngrößenparameter des individuellen Kenngrößensatzes von einer Modellkomponente geändert, derart, dass die globale Zuverlässigkeitskenngröße geändert wird.

Die Vorrichtung kann insbesondere zur Durchführung des zuvor beschriebenen Verfahrens konfiguriert sein. Die Vorrichtung kann zumindest teilweise in der Anlage integriert sein.

Ein noch weiterer Aspekt der Erfindung ist ein System, umfassend mindestens eine zuvor beschriebene Vorrichtung und mindestens eine Anlage, insbesondere eine chemische Produktionsanlage.

Gemäß einer Ausführungsform des erfindungsgemäßen Systems kann das System mindestens eine weitere Anlage, insbesondere eine weitere chemische Produktionsanlage, umfassen. Insbesondere kann die mindestens eine Vorrichtung, wie eine Rechenvorrichtung, umfassend Hardware und/oder Softwaremodule, konfiguriert sein, die jeweilige Anlagenverfügbarkeit von zwei oder mehr Anlagen zu optimieren.

Ein noch weiterer Aspekt ist ein Computerprogramm mit Instruktionen ausführbar auf einem Prozessor derart, dass eine Anlagenverfügbarkeit von mindestens einer Anlage gemäß dem Verfahren nach einem der Ansprüche geändert wird.

Die Merkmale der Verfahren, Vorrichtungen, Systeme und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, die erfindungsgemäße Vorrichtung, dass erfindungsgemäße System und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Systems gemäß der vorliegenden Erfindung;
- Fig. 2: eine schematische Ansicht eines Ausführungsbeispiels eines Modells von einer Anlage gemäß der vorliegenden Erfindung; und
- Fig. 3: ein Ausführungsbeispiel eines Verfahrens gemäß der vorliegenden Erfindung.

Nachfolgend werden gleiche Bezugszeichen für gleiche Elemente verwendet.

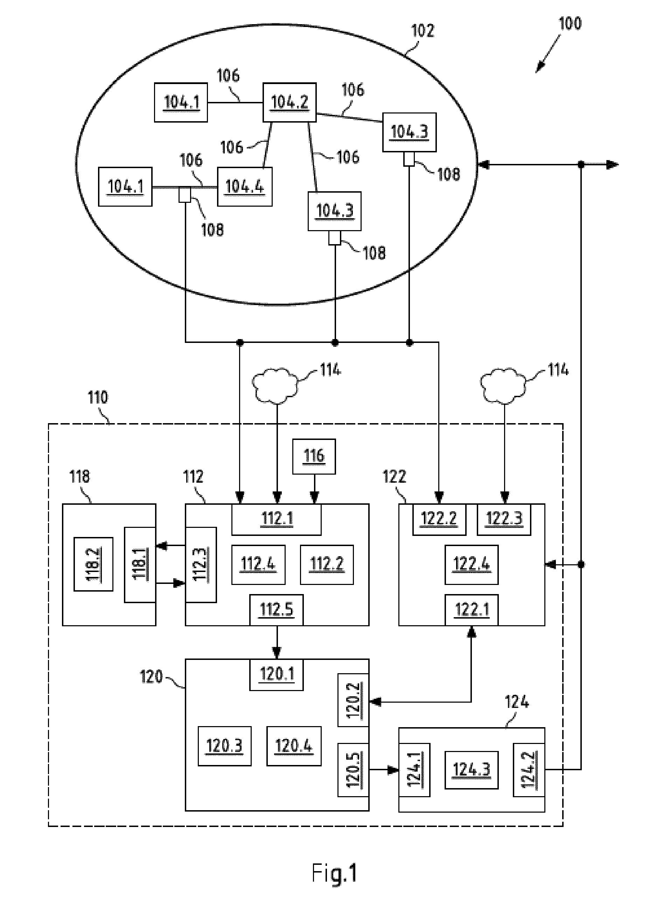

Die Figur 1 zeigt eine schematische Ansicht eines Ausführungsbeispiels eines Systems 100 gemäß der vorliegenden Erfindung. Das System 100 umfasst eine Anlage 102, insbesondere eine chemische Produktionsanlage 102. Die chemische Produktionsanlage 102 kann beispielsweise zumindest ein Teil einer Clothianidin-Produktionsanlage sein.

Die Anlage 102 umfasst eine Mehrzahl von Anlagenkomponenten 104.1 bis 104.4, wie beispielsweise ein Rührkessel. Wie zu erkennen ist, können bestimmte Anlagenkomponenten 104.1, 104.3 mehrfach in der Anlage 102 verbaut sein. Darüber hinaus sind zwischen verschiedenen Anlagenkomponenten 104.1 bis 104.4 funktionale Verbindungen 106 vorhanden.

Ferner ist beispielhaft in der vorliegenden Anlage 102 eine Mehrzahl von Sensoren 108 installiert. Ein Sensor 108 ist dazu eingerichtet, mindestens einen Parameterwert, welche die Anlage betrifft, zu messen. Ein oder mehrere Sensor/en 108 können zum Beispiel eingerichtet sein, eine Anlagenkomponente 104.1 bis 104.4 und/oder eine funktionale Verbindung 106 zwischen zumindest zwei Anlagenkomponenten 104.1 bis 104.4 zu überwachen. Beispielsweise kann eine Temperatur der Anlagenkomponente 104.1 bis 104.4 und/oder der zu verarbeiteten Substanz von einem Sensor 108 erfasst werden. Darüber hinaus kann ein Sensor eingerichtet sein, Positionsdaten der Anlagenkomponente 104.1 bis 104.4 und/oder Zustandsdaten der Anlagenkomponente 104.1 bis 104.4, wie die Stellung eines Ventils 104.1 bis 104.4 oder Roboterarms 104.1 bis 104.4 zu erfassen. Auch können Durchflussmengen durch eine funktionale Verbindung 106 von einem Sensor 108 erfasst werden.

Die Sensordaten können einer Vorrichtung 110, eingerichtet zum Optimieren der Anlagenverfügbarkeit der Anlage 102 bzw. der globalen Zuverlässigkeitskenngröße der Anlage 102, bereitgestellt werden. Das dargestellte schematische Ausführungsbeispiel einer Vorrichtung 110 gemäß der Erfindung umfasst ein Modellierungsmodul 112. Das Modellierungsmodul 112 ist eingerichtet, aus bereitgestellten Daten einer Anlage 102, wie den Sensordaten, ein Modell der Anlage 102 zu erzeugen.

Das Modellierungsmodul 112 kann eine Schnittstelle 112.1 in Form eines Dateneingangs 112.1 umfassen, um Daten zu empfangen. Beispielsweise kann der Dateneingang 112.1 eingerichtet sein, die von mindestens einem Sensor 108 der Anlage 102 bereitgestellten Sensordaten zu empfangen. Ferner ist der Dateneingang 112.1 vorliegend eingerichtet, mittels eines Kommunikationsnetzes 114 mit (nicht dargestellten) externen Datenquellen zu kommunizieren. Bei dem Kommunikationsnetz 114 kann es sich beispielsweise um das Internet handeln. Eine externe Quelle kann beispielsweise Daten hinsichtlich des Aufbaus bzw. der Konstruktion der Anlage 102 bereitstellen. Ferner kann eine Benutzerschnittstelle 116, insbesondere in Form von Eingabemitteln 116, vorgesehen sein, um Daten, die die Anlage 102 betreffen, einzuspeisen. Die Benutzerschnittstelle 116 kann Teil der Vorrichtung 110 oder eines anderen Gerätes sein. Es versteht sich, dass zwei oder mehr Dateneingänge vorgesehen sein können.

Ferner umfasst das Modellierungsmodul 112 eine Identifizierungseinheit 112.2. Die Identifizierungseinheit 112.2 ist insbesondere eingerichtet, aus den über den Dateneingang 112.1 bereitgestellten Daten eine Mehrzahl von Anlagenkomponenten 104.1 bis 104.4 und/oder funktionalen Verbindungen 106 der Anlage 102 zu identifizieren. Insbesondere zur Identifizierung von Anlagenkomponenten 104.1 bis 104.4 kann mindestens ein Relevanzkriterium vorgegeben sein. Erfüllen die Daten von einer Baugruppe das vorgegebene Relevanzkriterium, so wird die entsprechende Baugruppe (vorzugsweise automatisch) als Anlagenkomponente 104.1 bis 104.4 identifiziert. Eine identifizierbare Anlagenkomponente 104.1 bis 104.4 ist vorliegend insbesondere eine (sinnvolle) durch Kriterien vorgebbare Organisationseinheit, die einen Beitrag zur Funktion des Gesamtkomplexes leistet und nicht nur zur Dekoration oder Ähnlichem angebracht ist.

Nach der Identifizierung der Mehrzahl von Anlagenkomponenten 104.1 bis 104.4 werden mittels der bereitgestellten Daten von dem Dateneingang 112.2 vorzugsweise sämtliche funktionale Verbindungen 106, insbesondere tatsächliche und potentiell mögliche funktionale Verbindungen, identifiziert. Es versteht sich, dass auch vor der Identifizierung der Mehrzahl von Anlagenkomponenten 104.1 bis 104.4 oder parallel hierzu funktionale Verbindungen 106 insbesondere basierend auf vorgebbaren Kriterien identifiziert werden können.

Darüber hinaus umfasst das Modellierungsmodul 112 eine weitere Schnittstelle 112.3 eingerichtet zum Kommunizieren mit einer ersten Datenbank 118 und eine Generierungseinheit 112.4. Die erste Datenbank 118 kann eine Bibliothek mit Modellkomponenten von Anlagenkomponenten 104.1 bis 104.4 umfassen. Die Generierungseinheit 112.4 ist insbesondere eingerichtet, die Daten einer identifizierten Anlagenkomponente 104.1 bis 104.4 zu analysieren und unter Nutzung der Schnittstelle 112.3 eine zu der identifizierten Anlagenkomponente 104.1 bis 104.4 korrespondierende Modellkomponente aus der ersten Datenbank 118 abzurufen. In entsprechender Weise werden sämtliche Anlagenkomponenten 104.1 bis 104.4 und/oder funktionale Verbindungen 106 abgebildet und ein Modell von der Anlage 102 erstellt. Über einen Datenausgang 112.5 kann das Modell der Anlage 102 einem Simulationsmodul 120 bereitgestellt werden.

Das Simulationsmodul 120 weist eine erste Schnittstelle in Form eines ersten Dateneingang 120.1 eingerichtet zum Empfangen des Modells der Anlage 102 bzw. der Modelldaten des erstellten Modells auf. Ferner weist das Simulationsmodul 120 eine weitere Datenschnittstelle 120.2 auf. Über die weitere Datenschnittstelle 120.2 kann das Simulationsmodul 120 mit einer weiteren Datenbank 122 über eine Schnittstelle 122.1 kommunizieren. Die weitere Datenbank 122 ist eingerichtet, über die Schnittstelle 122.1 individuelle, jeweils einer Anlagenkomponente 104.1 bis 104.4 zugeordnete Kenngrößensätze bereitzustellen.

Ferner kann die weitere Datenbank 122 mindestens zwei weitere Schnittstellen 122.2 und 122.3 umfassen. Die Schnittstelle 122.2 kann in Form eines Dateneingangs 122.2 eingerichtet zum Empfangen der oben bereits beschriebenen Sensordaten von Sensoren 108 der Anlage 102 vorgesehen sein. Die weitere Schnittstelle 122.3 kann Daten über ein externes Kommunikationsnetz 114 von externen Datenquellen, die Daten über die Zuverlässigkeit von mindestens einer Anlagenkomponente 104.1 bis 104.4 bereitstellen, empfangen. Es versteht sich, dass weitere Schnittstellen, insbesondere Benutzerschnittstellen, zur Eingabe von entsprechenden Daten vorgesehen sein können.

Die in einem aktualisierbaren Speicher 122.4 gespeicherten individuellen Kenngrößensätze können basierend auf aktuellen bzw. augenblicklichen Daten, wie aktuellen Sensordaten und/oder sonstigen Daten, (regelmäßig) aktualisiert werden.

Eine Zuordnungseinheit 120.3 ordnet einer identifizierten Anlagenkomponente 104.1 bis 104.4, insbesondere der Modellkomponente, den zugehörigen individuellen Kenngrößensatz zu. Beispielsweise kann vorgesehen sein, dass die Zuordnungseinheit 120.3 basierend auf der identifizierten Anlagenkomponente 104.1 bis 104.4 auf den zugehörigen individuellen Kenngrößensatz, der in der Datenbank 122 gespeichert ist, zugreift und insbesondere ausliest. Es versteht sich, dass gemäß anderen Varianten der Erfindung die Zuordnung auch durch das Modellierungsmodul 112 durchgeführt werden kann.

Des Weiteren weist das Simulationsmodul 120 eine Simulationseinheit 120.4 auf. Die Simulationseinheit 120.4 ist insbesondere eingerichtet, eine Simulation der Anlage 102 mittels des erstellten Modells und basierend auf den zugeordneten individuellen Kenngrößensätzen durchzuführen. Insbesondere kann zur Optimierung der globalen Zuverlässigkeitskenngröße der Anlage 102 mindestens ein veränderlicher individueller Kenngrößenparameter von mindesten einem individuellen Kenngrößensatz hierzu verändert werden, wie nachfolgend näher ausgeführt werden wird.

Das Ergebnis des Optimierungsprozesses bzw. des Simulationsprozesses kann über Schnittstellen 120.5 und 124.1 einem Ausgabemodul 124 bereitgestellt werden. Das Ausgabemodul 124 ist eingerichtet, zumindest die aufgrund des Simulationsprozesses geänderten Kenngrößenparameter auszugeben. Beispielsweise kann dies durch eine Benutzerschnittstelle 124.3, beispielsweise in Form eines Bildschirms, und/oder durch direkte Rückkopplung von mindestens einen geänderten Kenngrößenparameter an die Anlage 102 und/oder einer weiteren Einrichtung durchgeführt werden. Hierzu kann insbesondere eine Schnittstelle 124.2 in Form eines Datenausgangs 124.2 vorgesehen sein. Bei der weiteren Einrichtung kann es sich beispielsweise um ein Ersatzteillagermodul eingerichtet zum Betreiben eines Ersatzteillagers für die Anlage 102 handeln. Beispielsweise kann die im Durchschnitt vorrätig zu haltende Anzahl von Anlagenkomponenten 104.1 bis 104.4 aufgrund des Simulationsprozesses geändert worden sein. Dann kann beispielsweise eine automatische Anpassung abhängig von dem Simulationsergebnis von dem Ersatzteillagermodul durchgeführt werden. Zum Beispiel kann eine automatische Initiierung eines Bestellvorgangs für eine oder mehrere Anlagenkomponente/n bewirkt werden. Ferner kann die Datenbank 122 entsprechend aktualisiert werden.

Es versteht sich, dass ein zuvor beschriebenes Modul zumindest teilweise aus einem Hardwaremodul und/oder einem Softwaremodul gebildet sein kann. Ferner versteht es sich, dass aus zwei oder mehr der vorstehend beschriebenen Module ein gemeinsames Modul gebildet werden kann.

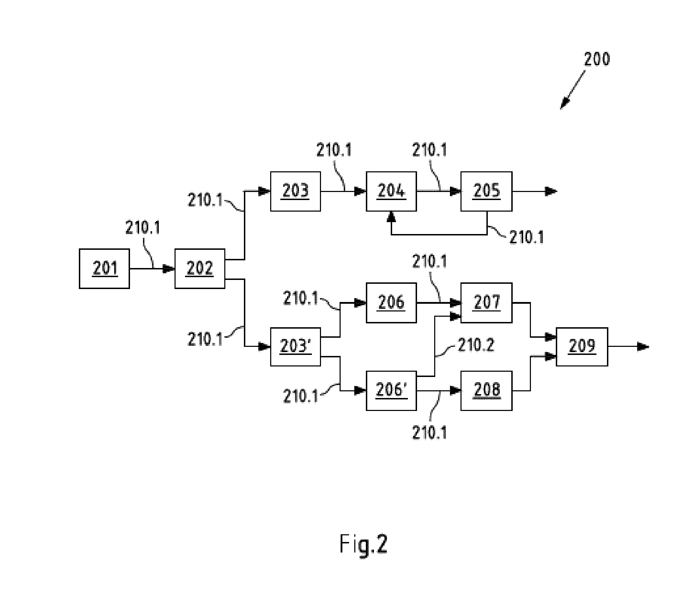

Die Figur 2 zeigt eine schematische Ansicht eines beispielhaften Modells 200 einer Anlage, insbesondere einer chemischen Produktionsanlage, entsprechend der Erfindung. Das Modell 200 ist insbesondere eine Abbildung der Anlage. Das Modell umfasst eine Mehrzahl von Modellkomponenten 201 bis 209, welche jeweils zu realen Anlagenkomponenten der Anlage korrespondieren. Ferner sind die realen funktionalen Verbindungen zwischen den realen Anlagenkomponenten in dem Modell als funktionale Modellverbindungen 210.1, 210.2 abgebildet.

Bei einer chemischen Produktionsanalage repräsentieren die funktionalen Modellverbindungen insbesondere den Fluss eines Ausgangsmaterials bzw. einer Ausgangssubstanz in einem Produktstrom von einer ersten Eingangsanlagenkomponente bis zur finalen Anlagenkomponente, welche das End- oder Zwischenprodukt ausgibt.

Auch wenn vorliegend nur das Modell der Anlage dargestellt und mit den Bezugszeichen 201 bis 209 die jeweilige Modellkomponente bezeichnet sind, werden diese Bezugszeichen 201 bis 209 zur besseren Übersicht auch zur Bezeichnung der zu der jeweiligen Modellkomponente realen (nicht dargestellten) Anlagenkomponente verwendet.

Im vorliegenden Ausführungsbeispiel wird eine Ausgangssubstanz zunächst von der Anlagenkomponente 201 verarbeitet. Die verarbeitete Substanz wird dann von der Anlagenkomponente 202 weiterverarbeitet. Die Anlagenkomponenten 201 und 202 sind mit anderen Worten funktional in Reihe geschaltet.

Anschließend wird vorliegend die weiterverarbeitete Substanz von der Anlagenkomponente 203 und von der Anlagenkomponente 203' weiterverarbeitet. Die Anlagenkomponenten 203, 203' können sich nur geringfügig unterscheiden, was durch den Zusatz ' veranschaulicht wird. Beispielsweise kann eine Anlagenkomponente eine zusätzliche Funktion aufweisen, einen höheren Durchsatz haben, etc.

Nach der Verarbeitung durch die Anlagenkomponente 203 wird die Substanz durch die in Reihe mit der Anlagenkomponente 203 geschalteten Anlagenkomponenten 204 und 205 weiterverarbeitet, wobei die Substanz zumindest teilweise nach Verarbeitung durch die Anlagenkomponente 205 wieder zur Anlagenkomponente 204 zurückgeführt werden kann. Die Anlagenkomponente 205 kann dann das Endprodukt der Anlage ausgeben.

In einem zu den Anlagenkomponenten 203 bis 205 parallelen Strang ist vorliegend vorgesehen, dass nach der Verarbeitung durch Anlagenkomponente 203' die Substanz durch die aus funktionaler Sicht parallel geschalteten Anlagenkomponenten 206, 206' weiterverarbeitet wird. An die Anlagenkomponente 206 schließen sich die Anlagenkomponenten 207 und dann 209 an, während sich an die Anlagenkomponente 206' die Anlagenkomponenten 208 und 209 anschließen. Dies ist insbesondere der tatsächliche in der Anlage implementierte Fluss 210.1. Ein potentiell realisierbarer Fluss bzw. eine potentielle funktionale Verbindung 210.2 ist vorliegend zwischen den Anlagenkomponenten 206' und 207 vorgesehen. Dies bedeutet, dass bei Bedarf die Substanz alternativ oder zusätzlich nach der Verarbeitung durch die Anlagenkomponente 206' von der Anlagenkomponente 207 und/oder 208 weiterverarbeitet werden kann.

Eine entsprechende Abbildung einer realen Produktionsanlage in ein Modell kann insbesondere basierend auf Sensordaten erfolgen. Beispielsweise können basierend auf Sensordaten funktionale Verbindungen zwischen zwei Anlagenkomponenten identifiziert werden.

Wie oben ausgeführt wurde, wird vorzugsweise jeder Anlagenkomponente bzw. Modellkomponente 201 bis 209 jeweils ein individueller Kenngrößensatz zugeordnet. Der individuelle Kenngrößensatz kann insbesondere eine Ausfallwahrscheinlichkeit umfassen. Die Ausfallwahrscheinlichkeit kann beispielsweise basierend auf historischen Daten der Anlagenkomponente 201 bis 209, die durch Sensoren und/oder externe Datenquellen bereitgestellt werden, bestimmt werden. Die Daten können beispielsweise die Anzahl der in der Vergangenheit bei dieser Anlagenkomponente aufgetretenen Ausfälle, beispielsweise aufgrund eines Defekts, umfassen. Ferner kann ein individueller Kenngrößensatz die mit dem jeweiligen Austausch der Anlagenkomponente einhergehende Zeitdauer, die bei einer Neuinstallierung erforderliche Zeitdauer für eine Neukalibrierung der Anlagenkomponente und/oder die Dauer der Lieferung der Anlagenkomponente umfassen. Ferner kann der geplante (durchschnittliche) oder tatsächliche, beispielsweise von einem Sensor erfasste Lagerbestand der jeweiligen Anlagenkomponente von dem entsprechenden individuellen Kenngrößensatz umfasst sein.

Der individuelle Kenngrößensatz kann mindestens einen veränderbaren bzw. modifizierbaren Kenngrößenparameter aufweisen. Dieser veränderbare Kenngrößenparameter ändert insbesondere den individuellen Kenngrößensatz derart, dass die individuelle Verfügbarkeit der entsprechenden Anlagenkomponente vergrößert oder verringert wird. Beispielsweise kann es sich um den augenblicklichen oder durchschnittlichen Lagerbestand einer Anlagenkomponente 201 bis 209 handeln.

Bei der Simulation des Modells wird der mindestens eine veränderliche Kenngrößenparameter bei bevorzugt jedem Kenngrößensatz von jeder Anlagenkomponente bei ansonsten unveränderten Parametern so lange (iterativ) verändert, bis eine Simulation zu einem optimierten Ergebnis hinsichtlich der gesamt Verfügbarkeit der Anlage, also der globalen Zuverlässigkeitskenngröße der Anlage, unter vorgegebenen Rahmenbedingungen gelangt ist. Vorzugsweise wird die Auswirkung eines Ausfalls einer Anlagenkomponente auf die globale Anlagenverfügbarkeit 201 bis 209 der Anlage simuliert.

Es ist insbesondere erkannt worden, dass neben der individuellen Zuverlässigkeitskenngröße einer Anlagenkomponente, die aus dem Kenngrößensatz einer Anlagenkomponente 201 bis 209 abgeleitet wird, insbesondere die Position innerhalb der Anlage und die damit einhergehende/n funktionale/ Verbindung/en 210.1, 210.2 mit mindestens einer weiteren Anlagenkomponente 201 bis 209 wesentlich ist. Gerade die Berücksichtigung der funktionalen Verbindungen 210.1, 210.2 bei der Simulation des Modells kann zu überraschenden und im Vergleich zum Stand der Technik signifikant besseren Optimierungsergebnissen führen.

Beispielhaft führt vorliegend ein Ausfall von Anlagenkomponenten 201 und 202 direkt zu einem Stillstand der Anlage. Hieraus kann durch den Simulationsprozess abgeleitet werden, dass die Ausfallzeit der Anlagenkomponenten 201 und 202 zur Optimierung der globalen Zuverlässigkeitskenngröße, beispielsweise durch eine Erhöhung des Lagerbestands der entsprechenden Anlagenkomponenten 201 und 202, reduziert werden kann.

Anschließend teilt sich der Produktionsprozess in zwei parallele Zweige auf. Fällt beispielsweise die Anlagenkomponente 203' aus, ist die Anlage dennoch weiterhin verfügbar (wenn dies auch mit Einschränkungen, beispielsweise einer geringeren Produktionsrate, verbunden sein kann). Auch kann beispielsweise ein Ausfall von Anlagenkomponente 208 eher verkraftet werden, als von Anlagenkomponente 207. Aufgrund der potentiellen funktionalen Verbindung 210.2 kann der Produktionsfluss von Anlagenkomponente 206' auf die Anlagenkomponente 207 umgelenkt werden. Daher kann durch die Simulation bestimmt werden, dass beispielsweise den Lagerbestand von Anlagenkomponente 207 auf Kosten einer anderen Anlagenkomponente, wie Anlagenkomponente 208, zu erhöhen ist. Entsprechend kann das Simulationsergebnis dazu führen, beispielsweise den Lagerbestand von der Anlagenkomponente 206' auf Kosten einer anderen Anlagenkomponente, wie der Anlagenkomponente 206, zu erhöhen.

Insgesamt ermöglicht es die Durchführung eines Simulationsprozesses, die globale Zuverlässigkeitskenngröße der Anlage unter Berücksichtigung von vorgegebenen Kriterien, wie ein maximal zulässiger (vorgebbarer) globaler Aufwandsparameter beispielsweise zur Lagerhaltung von den Anlagenkomponenten der Anlage zu optimieren, indem individuelle Zuverlässigkeitskenngrößen der einzelnen Anlagenkomponenten und die Topologie durch ein Modell der Anlage berücksichtigt werden. Der Aufwandsparameter kann beispielsweise ein Geldbetrag, eine maximal zur Verfügung stehende Lagerkapazität, etc. sein. Jeder Anlagenkomponente kann ein individueller Aufwandsparameter zugeordnet sein. Bei der Simulation kann der mindestens eine veränderbare Kenngrößenparameter derart geändert werden, dass die Summe der individuellen Aufwandsparameter den globalen Aufwandsparameter nicht überschreitet.

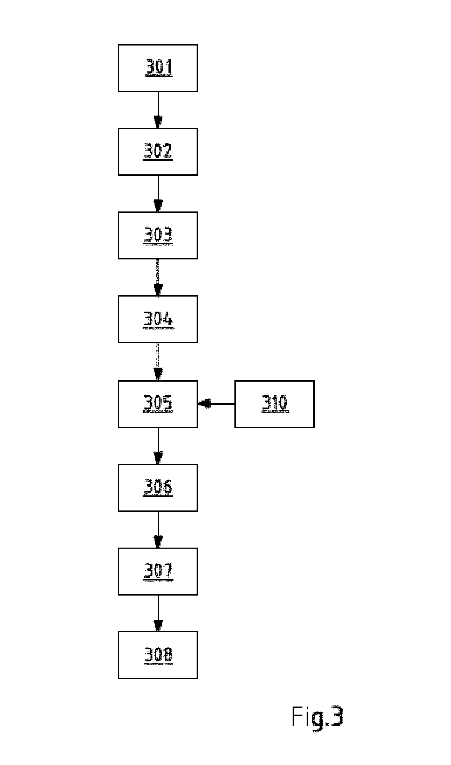

Die Funktionsweise des Systems 100 wird nachfolgend mittels des in Figur 3 gezeigten Ausführungsbeispiels von einem erfindungsgemäßen Verfahren näher erläutert.

In einem ersten Schritt 301 kann die Anlage 102 analysiert und Elemente der Anlage 102 erfasst werden. Dies kann insbesondere mittels in der Anlage 102 (ohnehin) verbauten Sensoren 108 erfolgen. Basierend auf den Sensordaten kann die Anlagentopologie der Anlage 102 erfasst werden. Zusätzlich oder alternativ können Daten aus (externen) Quellen analysiert werden, die beispielsweise Konstruktionspläne, Datenblätter, etc., von der ersten Maschine bzw. Anlage 102 bereitstellen können. Vorzugsweise kann dann zusammen mit diesen Daten, den Sensordaten und/oder weiteren Benutzerangaben die tatsächliche Topologie einer Anlage 102 erfasst werden. Insbesondere kann es vorkommen, dass Konstruktionspläne nicht aktuell sind und nicht mit der tatsächlichen Anlage 102 übereinstimmen. In diesem Fall kann aufgrund von Sensordaten und/oder Benutzerangaben die tatsächliche Topologie einer Anlage 102 erfasst werden.

In einem weiteren Schritt 302 kann eine Mehrzahl von (relevanten bzw. wesentlichen) Anlagenkomponenten 104.1 bis 104.4 der Anlage 102 identifiziert werden. Insbesondere können Relevanzkriterien vorgegeben werden, um Anlagenkomponenten 104.1 bis 104.4 aus den erfassten Elementen und Baugruppen zu identifizieren. So müssen die Anlagenkomponenten 104.1 bis 104.4 beispielsweise einen direkten Bezug zum Prozessfluss haben. Elemente einer Anlage 102, die bei einem Ausfall bzw. Defekt keinen Einfluss auf den Produktionsprozess haben, werden außen vor gelassen. Zudem kann vorgegeben sein, dass es sich um eine eigenständig funktionsfähige Baugruppe und beispielsweise nicht um eine einzelne Schraube einer entsprechenden Baugruppe handeln muss. Weitere Kriterien können individuell und abhängig von der Anlage 102 vorgegeben werden. Die Identifizierung kann zudem unter Berücksichtigung von Sensordaten erfolgen.

Ferner kann in Schritt 303 mindestens eine funktionale Verbindung 106 zwischen zumindest zwei identifizierten Anlagenkomponenten 104.1 bis 104.4 identifiziert werden. Auch diese Identifizierung kann abhängig von Sensordaten, wie von einem an einer funktionalen Verbindung 106 angeordneten Sensor 108, und/oder anderen Datenquellen erfolgen. Eine funktionale Verbindung 106 liegt insbesondere dann vor, wenn ein zu verarbeitendes Produkt von einer ersten Anlagenkomponente 104.1 bis 104.4 an eine weitere Anlagenkomponente 104.1 bis 104.4 zumindest weitergeleitet werden könnte und/oder wenn die Funktion einer Anlagenkomponente 104.1 bis 104.4 von einer Funktion einer anderen Anlagenkomponente 104.1 bis 104.4 abhängt. Beispielsweise kann bei Ausfall einer Energieversorgung aufgrund einer funktionalen Verbindung 106 zu einer weiteren Anlagenkomponente 104.1 bis 104.4 auch diese Anlagenkomponente 104.1 bis 104.4 zumindest teilweise ausfallen.

Es versteht sich, dass die Schritte 302 und 303 im Wesentlichen parallel und/oder der Schritt 303 zumindest teilweise vor dem Schritt 302 durchgeführt werden kann. Beispielsweise kann zunächst eine funktionalen Verbindung 106 zwischen zwei Elementen identifiziert und hieraus abgeleitet werden, dass die zwei Elemente (wesentliche) Anlagenkomponenten 104.1 bis 104.4 darstellen, die in einem Modell der Anlage 102 abgebildet werden sollten.

Nachdem bevorzugt sämtliche Anlagenkomponenten 104.1 bis 104.4 und die zugehörigen funktionalen Verbindungen 106 identifiziert worden sind, können diese von dem Modellierungsmodul 112, insbesondere dem Generierungseinheit 112.4, in ein Modell abgebildet werden (Schritt 304). Beispielsweise kann das Generierungseinheit 112.4 die Funktionalität und/oder Eigenschaften bevorzugt von jeder Anlagenkomponente 104.1 bis 104.4 analysieren und in einer ersten Datenbank 118 nach einer Modellkomponente suchen, welche zu der realen Anlagenkomponente 104.1 bis 104.4 (ausreichend) korrespondiert. Entsprechend können funktionale Verbindungen 106 abgebildet werden.

Für den Fall, dass keine Modellkomponente in der Datenbank 118 gespeichert ist, die in hinreichender Weise zu der realen Anlagenkomponente 104.1 bis 104.4 korrespondiert, kann die Generierungseinheit 112.4 aus z.B. bereitgestellten Submodellkomponenten eine neue Modellkomponente abbilden, die zu der Anlagenkomponente 104.1 bis 104.4, insbesondere zu der Funktionalität und/oder Eigenschaften der Anlagenkomponente 104.1 bis 104.4, ausreichend korrespondiert. Anschließend kann die neu generierte Modellkomponente in der Datenbank 118 abgespeichert werden.

In einem nächsten Schritt 305 kann für die identifizierten Anlagenkomponenten jeweils ein individueller Kenngrößensatz bereitgestellt werden. Die von dem individuellen Kenngrößensatz umfassten Kenngrößenparameter betreffen insbesondere die individuelle Zuverlässigkeit einer Anlagenkomponente 104.1 bis 104.4. Insbesondere kann aus dem Satz eine individuelle Zuverlässigkeitskenngröße abgeleitet werden, die bezogen auf einen Zeitraum (z.B. pro Jahr) eine Wahrscheinlichkeit angibt, dass eine Anlagenkomponente 104.1 bis 104.4 nicht verfügbar (bzw. verfügbar) ist.

Beispielsweise kann der jeweilige individuelle Kenngrößensatz einer Anlagenkomponente104.1 bis 104.4 in einem Schritt 310 basierend auf historischen Daten und/oder Sensordaten und/oder Daten aus externen Quellen bestimmt werden. So können die Ausfallzeiten einer Anlagenkomponente 104.1 bis 104.4 aus einem vergangenen Zeitraum, die in dem vergangenen Zeitraum vorgenommen Bestellvorgänge bzw. die Bestelldauer, der durchschnittliche Lagerbestand einer Anlagenkomponente in der Vergangenheit, Belastung der Anlagenkomponente in einem vergangen Zeitraum (beispielsweise kann bei einer hohen Belastung von einem hohen Verschleiß ausgegangen werden, was die Ausfallwahrscheinlichkeit erhöht), vergangene Umwelteinwirkungen auf eine Anlagenkomponente (z.B. extreme Temperaturen, die zu eine erhöhte Ausfallwahrscheinlichkeit bedingen können), die mit einer Bestellung einer Anlagenkomponente verbundenen Kosten, der augenblickliche oder durchschnittliche Lagerbestand (pro Zeiteinheit, z.B. pro Jahr) der Anlagenkomponente, etc. von einem individuellen Kenngrößensatz umfasst sein.

Die in Schritt 310 generierten individuellen Kenngrößensätze können regelmäßig aufgrund z.B. von Echtzeitdaten von Sensoren 108 angepasst und aktualisiert werden. Dann können die entsprechenden Sätze bereitgestellt und insbesondere das Simulationsmodul über geänderte individuelle Kenngrößensätze informiert werden. Beispielsweise kann bei Empfang einer entsprechenden Information automatisch eine erneute Simulation veranlasst werden.

In Schritt 305 werden die jeweiligen individuellen Kenngrößensätze den einzelnen Modellkomponenten von einer Zuordnungseinheit 120.3 zugeordnet. Beispielsweise können Anlagenkomponenten 104.1 bis 104.4 und Modellkomponenten sowie individuelle Kenngrößensätze eindeutige Kennungen umfassen, mit denen eine korrekte Zuordnung durchgeführt werden kann. Beispielsweise kann eine Seriennummer einer Anlagenkomponente 104.1 bis 104.4 zur Identifizierung der Anlagenkomponente 104.1 bis 104.4, des individuellen Kenngrößensatzes der Anlagenkomponente 104.1 bis 104.4 und/oder der entsprechenden Modellkomponente verwendet werden.

Nach der Generierung des Modells der Anlage 102 und der Zuordnung kann eine Simulationseinheit 120.4 eine Simulation in Schritt 306 durchführen. Ziel der Simulation ist es insbesondere, die globale Zuverlässigkeitskenngröße der Anlage 102 durch Ändern von mindestens einem veränderbaren individuellen Kenngrößenparameter von mindestens einem individuellen Kenngrößenparametersatz vorzugsweise unter Berücksichtigung von mindestens einem vorgebbaren globalen Aufwandskriterium bzw. einem vorgebbaren globalen Aufwandsparameter zu optimieren. Insbesondere kann in einem iterativen Optimierungsprozess während der Simulation eine Mehrzahl von veränderbaren individuellen Kenngrößenparameter geändert werden, bis ein Simulationsergebnis mit einer optimierten globalen Zuverlässigkeitskenngröße erzielt wird, welches sich auch durch weitere Änderungen nicht verbessern lässt. Während der Simulation wird insbesondere durch eine Änderung des veränderbaren individuellen Kenngrößenparameters der Einfluss eines Ausfalls der zugehörigen Anlagenkomponente auf die globalen Zuverlässigkeitskenngröße untersucht. Beispielsweise kann während der Simulation eine nichtlineare Vorschrift abgearbeitet werden. In einer bevorzugten Ausführungsform kann eine Lagrange-Newton-Iteration, wie ein Lagrange-Newton-Verfahren, als Vorschrift vorgegeben bzw. implementiert sein.

Ferner kann in Schritt 307 das Simulationsergebnis durch ein Ausgabemodul 124 ausgegeben werden. Beispielsweise kann das Simulationsergebnis über eine Benutzerschnittstelle angezeigt werden. Insbesondere kann das Simulationsergebnis die optimierte globale Zuverlässigkeitskenngröße und/oder zumindest Teile der geänderten individuellen Kenngrößensätze umfassen. Es kann optional vorgesehen sein, dass das vorgebbare globale Aufwandskriterium von einem Benutzer änderbar ist, um beispielsweise die globale Zuverlässigkeitskenngröße unter Berücksichtigung eines geänderten globalen Aufwandskriteriums durch einen erneuten Simulationsprozess (Schritt 306) erneut zu optimieren.

In dem nächsten Schritt 308 kann basierend auf dem Simulationsergebnis der reale individuelle Parameter entsprechend dem durch den Simulationsprozess geänderten individuellen Kenngrößenparameter (automatisch) angepasst werden. Für den Fall, dass es sich bei dem geänderten Parameter um den durchschnittlichen (auf z.B. ein Jahr bezogen) Lagerbestand einer Anlagenkomponente 104.1 bis 104.4 handelt, kann in Schritt 308 der Ist-Parameterwert mit dem durch die Simulation ermittelten Soll-Parameterwert verglichen und bei Detektion einer Abweichung eine Anpassung des Ist-Parameterwerts bewirkt werden. In einfacher Weise kann die globale Zuverlässigkeitskenngröße bzw. die Anlagenverfügbarkeit der Anlage 102 optimiert werden.

## Patentansprüche

1. Verfahren zum Optimieren einer Anlagenverfügbarkeit von mindestens einer Anlage (102), insbesondere einer ersten chemischen Produktionsanlage (102), wobei die erste Anlage (102) eine Mehrzahl von Anlagenkomponenten (104.1, 104.2, 104.3, 104.4) und mindestens eine funktionale Verbindung (106) zwischen zumindest zwei Anlagenkomponenten (104.1, 104.2, 104.3, 104.4) aufweist, umfassend:
- Bereitstellen von zumindest einem Modell (200) der Anlage (102), wobei das Modell eine Mehrzahl von zu der jeweiligen Anlagenkomponente (104.1, 104.2, 104.3, 104.4) korrespondierenden Modellkomponenten (201, 202, 203, 203', 204, 205, 206, 206', 207, 208, 209) und mindestens eine zu der funktionalen Verbindung (106) korrespondierende funktionale Modellverbindung (210.1, 210.2) zwischen zumindest zwei Modellkomponenten (201, 202, 203, 203', 204, 205, 206, 206', 207, 208, 209) aufweist,
- Zuordnen von mindestens einem individuellen Kenngrößensatz einer Anlagenkomponente (104.1, 104.2, 104.3, 104.4) zu der zu der Anlagenkomponente (104.1, 104.2, 104.3, 104.4) korrespondierenden Modellkomponente (201, 202, 203, 203', 204, 205, 206, 206', 207, 208, 209), und
- Bestimmen von mindestens einer globalen Zuverlässigkeitskenngröße der Anlage (102), indem eine Simulation des Modells (200) der Anlage (102) basierend auf dem bereitgestellten individuellen Kenngrößensatz durchgeführt wird,
- wobei während der Durchführung der Simulation des Modells (200) der Anlage (102) mindestens ein veränderbarer individueller Kenngrößenparameter des individuellen Kenngrößensatzes von mindestens einer der Modellkomponenten (201, 202, 203, 203', 204, 205, 206, 206', 207, 208, 209) geändert wird, derart, dass die globale Zuverlässigkeitskenngröße geändert wird.

2. Verfahren nach Anspruch 1, **dadurch gekennzeichnet, dass** das Bereitstellen des Modells (200) der Anlage (102) umfasst:
- Identifizieren der Mehrzahl von Anlagenkomponenten (104.1, 104.2, 104.3, 104.4) abhängig von mindestens einem Relevanzkriterium,
- Identifizieren der funktionalen Verbindung (106) zwischen den identifizierten Anlagenkomponenten (104.1, 104.2, 104.3, 104.4), und
- Abbilden der identifizierten Anlagenkomponenten (104.1, 104.2, 104.3, 104.4) und der identifizierten funktionalen Verbindung (106) in ein Modell (200), indem in einer ersten Datenbank (118) umfassend Modellkomponenten (201, 202, 203, 203', 204, 205, 206, 206', 207, 208, 209) mindestens eine zu der Anlagenkomponente (104.1, 104.2, 104.3, 104.4) korrespondierende Modellkomponente (201, 202, 203, 203', 204, 205, 206, 206', 207, 208, 209) identifiziert wird.

3. Verfahren nach Anspruch 2, **dadurch gekennzeichnet, dass** das Identifizieren der Mehrzahl von Anlagenkomponenten (104.1, 104.2, 104.3, 104.4) das Erfassen von Anlagenkomponenten (104.1, 104.2, 104.3, 104.4) basierend auf Sensordaten und/oder von mindestens einer weiteren Datenquelle zur Verfügung gestellten Anlagenkomponentendaten umfasst.

4. Verfahren nach einem der vorherigen Ansprüche, **dadurch gekennzeichnet, dass** bei der Durchführung der Simulation zumindest die Auswirkung eines Ausfalls von mindestens einer der Anlagenkomponente (104.1, 104.2, 104.3, 104.4) auf die globale Zuverlässigkeitskenngröße der Anlage (102) bestimmt wird.

5. Verfahren nach einem der vorherigen Ansprüche, **dadurch gekennzeichnet, dass** der individuelle Kenngrößenparameter des individuellen Kenngrößensatzes der Anlagenkomponente (104.1, 104.2, 104.3, 104.4) zumindest basierend auf Sensordaten von der Anlagenkomponente (104.1, 104.2, 104.3, 104.4) bestimmt wird.

6. Verfahren nach einem der vorherigen Ansprüche, **dadurch gekennzeichnet, dass**
- der individuelle Kenngrößenparameter des individuellen Kenngrößensatzes der Anlagenkomponenten (104.1, 104.2, 104.3, 104.4) zumindest basierend auf historischen Daten der Anlagenkomponente (104.1, 104.2, 104.3, 104.4) bestimmt wird,
- wobei die historischen Daten in einer weiteren Datenbank (122) gespeichert sind.

7. Verfahren nach einem der vorherigen Ansprüche, **dadurch gekennzeichnet, dass** während der Durchführung der Simulation des Modells (200) mindestens einer der veränderbaren individueller Kenngrößenparameter von mindestens einem der individuellen Kenngrößensätze von mindestens einer der Anlagenkomponenten (104.1, 104.2, 104.3, 104.4) iterativ geändert wird, derart, dass die globale Zuverlässigkeitskenngröße geändert wird.

8. Verfahren nach einem der vorherigen Ansprüche, **dadurch gekennzeichnet, dass**
- das Simulationsergebnis zumindest die geänderte globale Zuverlässigkeitskenngröße und den mindestens einen geänderten individuellen Kenngrößenparameter von dem mindestens einen individuellen Kenngrößensatz umfasst, und
- in einem Regelungsschritt ein realer Ist-Wert des geänderten individuellen Kenngrößenparameters an den mindestens einen geänderten individuellen Kenngrößenparameter von dem mindestens einen individuellen Kenngrößensatz angepasst wird.

9. Verfahren nach einem der vorherigen Ansprüchen, **dadurch gekennzeichnet, dass** der mindestens eine individuelle Kenngrößenparameter des mindestens einen individuellen Kenngrößensatzes ausgewählt ist aus der Gruppe umfassend Lebensdauer der Anlagenkomponente (104.1, 104.2, 104.3, 104.4), Position der Anlagenkomponente (104.1, 104.2, 104.3, 104.4) in der Anlage (102), Austauschzeit der Anlagenkomponente (104.1, 104.2, 104.3, 104.4), durchschnittliche Anzahl der Anlagenkomponenten (104.1, 104.2, 104.3, 104.4) in einem Lager pro Zeiteinheit, augenblickliche Anzahl der Anlagenkomponenten (104.1, 104.2, 104.3, 104.4) in dem Lager, individueller Aufwandsparameter der Anlagenkomponente (104.1, 104.2, 104.3, 104.4), Lieferzeit der Anlagenkomponente (104.1, 104.2, 104.3, 104.4), Reinigungsaufwand der Anlagenkomponente (104.1, 104.2, 104.3, 104.4), Belastungsgrad der Anlagenkomponente (104.1, 104.2, 104.3, 104.4) während des Betriebs in der Anlage (102).

10. Verfahren nach einem der vorherigen Ansprüche, **dadurch gekennzeichnet, dass** die Simulation des Modells (200) der Anlage (102) bei Detektion einer Änderung von mindestens einem der individuellen Kenngrößenparameter von mindestens einem der individuellen Kenngrößensätze erneut durchgeführt wird.

11. Verfahren nach einem der vorherigen Ansprüche, **dadurch gekennzeichnet, dass**
- mindestens ein globaler Aufwandsparameter vorgegeben wird, und
- während der Durchführung der Simulation des Modells (200) der Anlage (102) der veränderbare individuelle Kenngrößenparameter des individuellen Kenngrößensatzes von einer Modellkomponente (201, 202, 203, 203', 204, 205, 206, 206', 207, 208, 209) geändert wird, derart, dass die globale Zuverlässigkeitskenngröße unter Einhaltung des vorgegebenen globalen Aufwandsparameters geändert wird.

12. Vorrichtung (110) zum Optimieren einer Anlagenverfügbarkeit von mindestens einer Anlage (102), insbesondere einer ersten chemischen Produktionsanlage (102), wobei die Anlage (102) eine Mehrzahl von Anlagenkomponenten (104.1, 104.2, 104.3, 104.4) und mindestens eine funktionale Verbindung (106) zwischen zumindest zwei Anlagenkomponenten (104.1, 104.2, 104.3, 104.4) aufweist, umfassend:
- mindestens einen Dateneingang (120.1) eingerichtet zum Empfangen von zumindest einem Modell (200) der Anlage (102), wobei das Modell (200) eine Mehrzahl von zu der jeweiligen Anlagenkomponente (104.1, 104.2, 104.3, 104.4) korrespondierenden Modellkomponenten (201, 202, 203, 203', 204, 205, 206, 206', 207, 208, 209) und mindestens eine zu der funktionalen Verbindung (106) korrespondierende funktionale Modellverbindung (210.1, 210.2) zwischen zumindest zwei Modellkomponenten (201, 202, 203, 203', 204, 205, 206, 206', 207, 208, 209) aufweist,
- mindestens eine Zuordnungseinheit (120.3) eingerichtet zum Zuordnen von mindestens einem individuellen Kenngrößensatz einer Anlagenkomponente (104.1, 104.2, 104.3, 104.4) zu der zu der Anlagenkomponente (104.1, 104.2, 104.3, 104.4) korrespondierenden Modellkomponente (201, 202, 203, 203', 204, 205, 206, 206', 207, 208, 209), und
- mindestens eine Simulationseinheit (120.4) eingerichtet zum Bestimmen von mindestens einer globalen Zuverlässigkeitskenngröße der Anlage (102), indem eine Simulation des Modells (200) der Anlage (102) basierend auf dem bereitgestellten individuellen Kenngrößensatz durchgeführt wird,
- wobei während der Durchführung der Simulation des Modells (200) der ersten Anlage (102) mindestens ein veränderbarer individueller Kenngrößenparameter des individuellen Kenngrößensatzes von einer Modellkomponente (201, 202, 203, 203', 204, 205, 206, 206', 207, 208, 209) geändert wird, derart, dass die globale Zuverlässigkeitskenngröße geändert wird.

13. System (100), umfassend:
- mindestens eine Vorrichtung (110) nach Anspruch 12, und
- mindestens eine Anlage (102), insbesondere eine chemische Produktionsanlage (102).

14. System (100) nach Anspruch 13, **dadurch gekennzeichnet, dass** das System (100) mindestens eine weitere Anlage, insbesondere chemische Produktionsanlage, umfasst.

15. Computerprogramm mit Instruktionen ausführbar auf einem Prozessor derart, dass eine Anlagenverfügbarkeit von mindestens einer Anlage (102) gemäß dem Verfahren nach einem der Ansprüche 1 bis 11 geändert wird.
